(19) Europäisches Patentamt

European Patent Office

Office européen des brevets

(11) **EP 1 613 111 A2**

(12) **EUROPEAN PATENT APPLICATION**

(43) Date of publication:
**04.01.2006 Bulletin 2006/01**

(51) Int Cl.:
*H04Q 7/36* (2006.01)

(21) Application number: **05253923.6**

(22) Date of filing: **24.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **02.07.2004 US 584497 P**

(71) Applicant: **Groundhog Technologies Inc.
Cambridge, MA 02142 (US)**

(72) Inventors:
• **Chen, Meng-Seng
Taipei City 105 (TW)**

• **Kuo, Tzu-Wen
Fongyuan City,
Taichung County 420 (TW)**
• **Shieh, Yuh-Pyng
Fongyuan City,
Taichung County 420 (TW)**

(74) Representative: **Wright, Howard Hugh Burnby et al
Withers & Rogers LLP
Goldings House,
2 Hays Lane
London SE1 2HW (GB)**

(54) **Partitioning method for mobile communication network**

(57) A partitioning method for a mobile communication network with an initial partition plan is disclosed. The partitioning method comprises: performing at least one of a plurality of network partitioning algorithms to generate a following partition plan; generating a corresponding function value for each of the initial and following partition plans according to an objective function; and selecting a better one of the initial and following partition plans according to the corresponding function values. The partitioning method can generate a refined or optimized partition plan in a systematic way to reduce the network load.

F I G.1E

EP 1 613 111 A2

**Description**

**BACKGROUND OF INVENTION**

1. FIELD OF THE INVENTION

The present invention generally relates to a network planning method used in a mobile communication network, and more particularly, relates to a partitioning method for a mobile communication network which can generate a refined partition plan to reduce the network load.

2. DESCRIPTION OF THE PRIOR ART

Typically, a mobile communication network is partitioned into a plurality of partition areas to facilitate mobility management. The partition areas form a single-layer partition plan. In some kinds of mobile networks, a multi-layer partitioning structure is applied. The multi-layer structure has a hierarchy of partition layers, where each partition layer is composed of one or more corresponding partition areas.

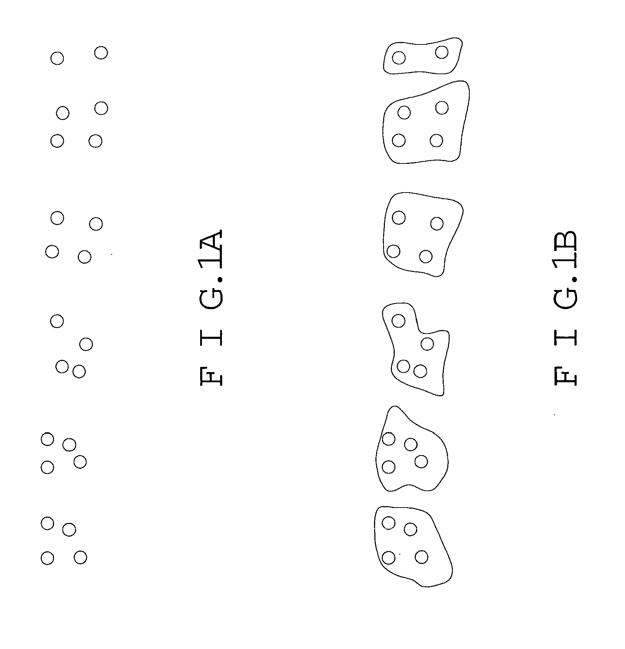

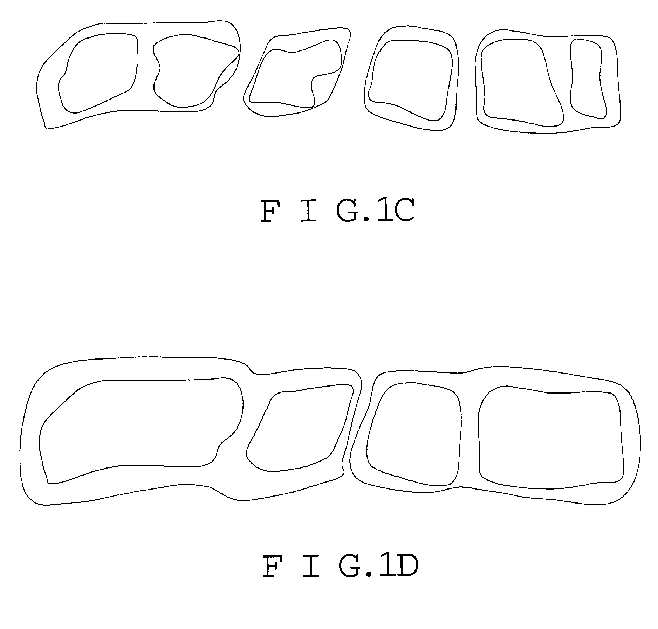

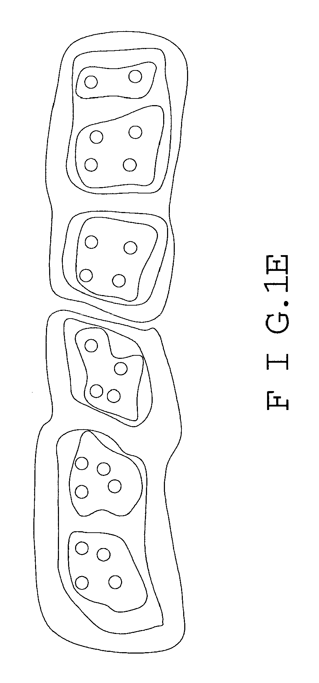

For example, a GSM (i.e. Global System for Mobile communication) network may employ a multi-layer partitioning structure as shown in Fig.1A to 1E. In Fig.1A, the lowest partition layer composed of BTS (i.e. base transceiver station) areas is shown. Fig.1B, 1C, and 1D show the partition layers composed of BSC (i.e. base station controller) areas, location areas, and MSC (i.e. mobile switching center) areas respectively from down to top. In these figures, each BTS area is contained in a BSC area, each BSC area is contained in a location area, and each location area is contained in a MSC area. By combining Fig.1A to 1D, a multi-layer partition plan is formed, as shown in Fig.1E. It is notable that a partition area of a lower partition layer may also stretch across two or more partition areas of an upper layer.

By applying a refined or optimized partition plan, single-layer or multi-layer, the load of a mobile communication network can be reduced, and the network performance can be upgraded accordingly. However, the conventional technology does not provide a systematic and objective solution for the network operators to find a refined or optimized partition plan, so it depends on the subjective experience of the operators or the try-and-error way to handle this issue. Usually, this approach would cause inefficiency and failure.

**SUMMARY OF INVENTION**

It is therefore an object of the present invention to provide a partitioning method for a mobile communication network, thereby generating a refined partition plan in a systematic way to reduce the network load.

According to one embodiment of the present invention, the partitioning method for a mobile communication network includes following steps: generating an initial function value for an initial partition plan of the mobile communication network according to an objective function; selecting one of a plurality of network partitioning algorithms; performing the selected network partitioning algorithm to generate a following partition plan of the mobile communication network; generating a following function value for the following partition plan according to the objective function; and determining a better one of the initial and following partition plans according to the initial and following function values.

According to another embodiment of the present invention, the partitioning method for a mobile communication network with an initial partition plan comprises following steps: performing at least one of a plurality of network partitioning algorithms to generate a following partition plan of the mobile communication network; generating a corresponding function value for each of the initial and following partition plans according to an objective function; and selecting a better one of the initial and following partition plans according to the corresponding function values of the initial and following partition plans.

**BRIEF DESCRIPTION OF THE DRAWINGS**

Fig.1A to 1E are diagrams showing the multi-layer partitioning structure of a GSM network.

Fig.2 is a flow chart of a preferred embodiment of the partitioning method for a mobile communication network with a multi-layer partitioning structure according to the present invention.

Fig.3 is a flow chart of a preferred embodiment of the partitioning method for a mobile communication network with a single-layer partitioning structure according to the present invention.

**DETAILED DESCRIPTION**

Though the embodiments described below may take a GSM network for example, people skilled in the art can easily apply technological features of the present invention to other mobile communication networks. Thus, the scope of the present invention is not limited to the GSM network.

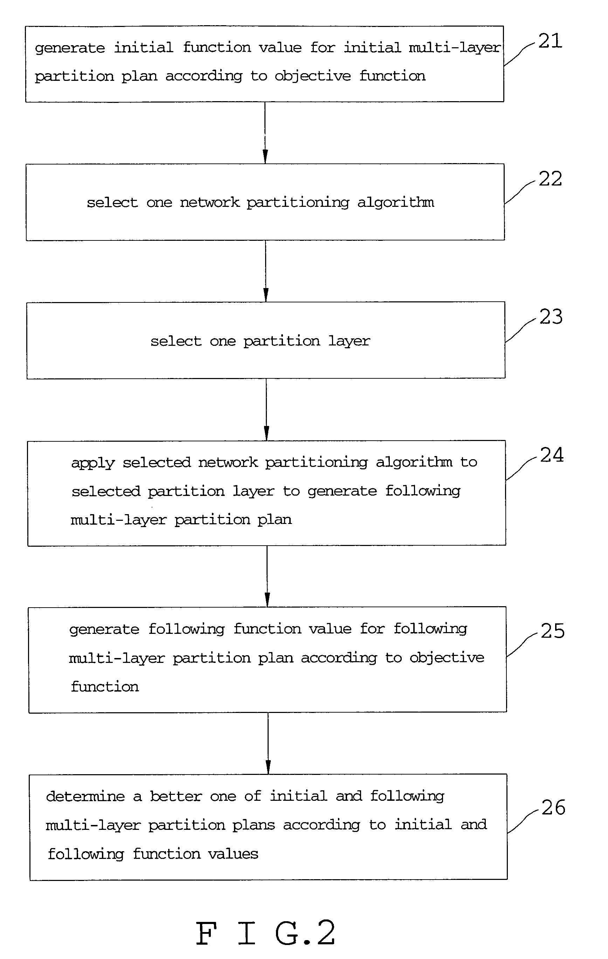

Fig.2 is a flow chart of a preferred embodiment of the partitioning method for a mobile communication network according to the present invention. The mobile communication network employs a multi-layer partitioning structure (i.e. a plurality of partition layers), and has an initial multi-layer partition plan. As shown in Fig.2, the flow comprises steps of:

21　generating an initial function value for the initial multi-layer partition plan according to an objective function;

22　selecting one of a plurality of network partitioning algorithms;

23　selecting one of the partition layers;

24　applying the selected network partitioning algorithm to the selected partition layer to generate a following multi-layer partition plan;

25　generating a following function value for the following multi-layer partition plan according to the objective function; and

26　determining a better one of the initial and following multi-layer partition plans according to the initial and following function values.

In this preferred embodiment, the objective function is used to estimate a network load caused by a multi-layer partition plan. A partition plan with a lower network load is better than that with a higher one. Thus, in step 26, whether the following partition plan is better than the initial one can be determined by comparing the initial and following function values. If the following partition plan is better, it can be applied to the network to reduce the network load. Otherwise, the following partition plan is discarded.

The objective function is generated according to a corresponding cost function for each of a plurality of network elements. Here the network element means an element within the network that contributes to the load of the network, and the corresponding cost function is for estimating a load of the network element. In one embodiment, the objective function is a linear combination of the corresponding cost functions for the network elements. That is,

$$f(P) = \alpha_1 \cdot f_1(P) + \alpha_2 \cdot f_2(P) + ... + \alpha_n \cdot f_n(P) \qquad \text{Eq.(1)}$$

In Eq.(1), P represents a partition plan, $\alpha_i$ is a weighting factor of $f_i$, $f_i$ represents the cost function of network element $i$ and $f$ represents the objective function for the network. The weighting factor can be adjusted to reflect the significance of the corresponding network element. It is notable that each item in the right side of Eq.(1) can be defined according to various purposes. For example, in a GSM network, the objective function can be defined as

$$f(P) = \alpha_{BTS,1} \cdot f_{BTS,1}(P) + \alpha_{BTS,2} \cdot f_{BTS,2}(P) + ... + \alpha_{BTS,n} \cdot f_{BTS,n}(P)$$

where $f_{BTS,i}(P)$ represents the location updates of BTS$_i$. It means that the objective function reflects total location updates of all n BTSs in the network when the partition plan is $P$. Therefore, the objective function can be designed to reflect the load of a specific part in the network under consideration. Another example is to consider CPU loading of MSC and BSC in the GSM network. The objective function is then defined as

$$f(P) = \alpha_{MSC,1} \cdot f_{MSC,1}(P) + ... + \alpha_{MSC,n} \cdot f_{MSC,n}(P)$$
$$+ \alpha_{BSC,1} \cdot f_{BSC,1}(P) + ... + \alpha_{BSC,p} \cdot f_{BSC,p}(P)$$

where $f_{MSC,i}$ (P) represents MSC i CPU loading and $f_{BSC,j}$ (P) represents BSC j CPU loading. Most of the CPU loadings are contributed by main operations, such as location update, inter MSC/BSC handover, intra BSC handover, mobile terminating call (MTC), mobile originating call (MOC), paging, short message service (SMS), etc. These main operations are well known to people skilled in the art and not described in detail here. Thus, the CPU loadings of MSC i and BSC j can be further expressed as

$$f_{MSC,i}(P) = \alpha_{MTC,I} \times \#(MTC) + \alpha_{MOC,I} \times \#(MOC) + \alpha_{SMS,i} \times \#(SMS) + \alpha_{HO} \times \#(\text{inter MSC handover}) + \alpha_{LU} \times \#(\text{location update}) + \alpha_{PG} \times \#(\text{paging})$$

$$f_{BSC,j}(P) = \beta_{MTC,j} \times \#(MTC) + \beta_{MOC,j} \times \#(MOC) + \beta_{SMS,j} \times \#(SMS) + \beta_{HO} \times [\#(\text{inter BSC handover}) + \#(\text{intra BSC handover})] + \beta_{LU} \times \#(\text{location update}) + \beta_{PG} \times \#(\text{paging})$$

where $\alpha$ and $\beta$ are weighting factors, and #(a specific operation) represents the number of the specific operation occurred during a period of time. Each $\alpha$ and $\beta$ can be estimated based on any applicable statistical method such as the regression model.

The objective function can also be defined as an "overall" cost function for the network if the load of all main network elements therein is considered. For example, in a GSM network, MSC, BSC, BTS, A-interface (i.e. the link between MSC and BSC), and A-bis interface (i.e. the link between BSC and BTS) are the main elements. Thus, the objective function can be defined as follows to reflect the load of the overall network:

$$\begin{aligned} f(P) = &\, \alpha_{MSC,1} \cdot f_{MSC,1}(P) + ... + \alpha_{MSC,n} \cdot f_{MSC,n}(P) \\ &+ \alpha_{A,1} \cdot f_{A,1}(P) + ... + \alpha_{A,n*p} \cdot f_{A,n*p}(P) \\ &+ \alpha_{BSC,1} \cdot f_{BSC,1}(P) + ... + \alpha_{BSC,p} \cdot f_{BSC,p}(P) \\ &+ \alpha_{Abis,1} \cdot f_{Abis,1}(P) + ... + \alpha_{Abis,p*q} \cdot f_{Abis,p*q}(P) \\ &+ \alpha_{BTS,1} \cdot f_{BTS,1}(P) + ... + \alpha_{BTS,q} \cdot f_{BTS,q}(P) \end{aligned} \qquad \text{Eq.(2)}$$

where $f_{msc,i}(P)$ represents the load of MSC i , $f_{A,j}(P)$ represent the load of A-interface j, $f_{BSC,k}(P)$ represents the load of BSC k, $f_{Abis,1}$ (P) represents the load of A-bis interface l , $f_{BTS,m}$ (P) represents the load of BTS m. In one embodiment for the GSM network, Eq.(2) is used as the objective function. In Eq.(2), the loads of MSC i and BSC k are defined as CPU loadings of MSC i and BSC k respectively, the load of BTS m is defined as the location updates of BTS m, the load of A-interface j is defined as a ratio between the current traffic quantity and the traffic capacity of A-interface j, and the load of A-bis interface l is defined as a ratio between the current traffic quantity and the traffic capacity of A-bis interface l.

In step 22, the network partitioning algorithms for selection include any algorithm that can generate the following partition plan based on the initial partition plan. It is notable that the initial partition plan may be the most original one in which each partition area of the lowest partition layer is also that of other upper layers, thereby fitting in with some algorithms. The applicable network partitioning algorithms include, but are not limited to, K-L (Kernighan-Lin) algorithm, greedy algorithm, F-M (Fiduccia-Mattheyses) algorithm, genetic algorithm, simulated annealing algorithm, and dynamic partition unit (DPU) algorithm. For information on K-L algorithm, please refer to "An Efficient Heuristic Procedure for Partitioning Graphs" (The Bell system technical journal, 49(1):291-307, 1970). For information on greedy algorithm, please refer to "Introduction to Algorithms: A Creative Approach, chapter 7" (pp.210.about.pp.211, Addison-Wesley Publishing Company, 1989). For information on F-M algorithm, please refer to "A Linear-Time Heuristic for Improving Network Partitions" (Proc. of DAC, 1982). For information on genetic algorithm, please refer to "A Genetic Algorithm For Optimizing Multiple Part Placement To Reduce Build Time" (Proceedings of the Fifth International Conference on Rapid Prototyping, Dayton, Ohio, June 1994). For information on simulated annealing algorithm, please refer to "Location Area Planning in Cellular Networks Using Simulated Annealing" (Proceedings of IEEE Infocom, The Conference on Computer Communications 2001, Anchorage, Ak., Apr. 22-26, 2001). For information on DPU algorithm, please refer to the U.S. patent application with No. 10/760,300, which is filed on 01/21/2004 and has the same inventors as the present invention. The above-mentioned publications are incorporated herein by reference.

In steps 22 and 23, the network partitioning algorithm and partition layer can be selected according to the requirements or realistic conditions of the network.

Step 24 plans the selected layer by the selected partitioning algorithm, and the multi-layer partition plan generated should satisfy a set of partitioning constraints, which put limitations on the operation of the selected partitioning algorithm. The set of partitioning constraints includes a subset of partition area constraints and a subset of partition layer constraints. The partition area constraint relates to each partition area itself, while the partition layer constraint relates to the whole partition layer. For example, in a GSM network, a partition area constraint for each location area is that the paging rate thereof cannot exceed an upper limit, and a partition layer constraint for the layer of MSC area is that the number of MSC areas is fixed. In one embodiment, the set of partitioning constraints further includes a subset of multi-layer constraints that relate to the whole multi-layer partition plan. One of the multi-layer constraints may be that each partition area of a lower partition layer should be comprised in a single partition area of an upper partition layer. For example, in the GSM network, each BTS area is contained in a BSC area, each BSC area is contained in a location area, and each location area is contained in a MSC area.

In a varied preferred embodiment of Fig.2, steps 22 to 25 are repeated to generate a sequence of partition plans, in which a following partition plan is better than a previous one. If steps 22 to 25 are repeated such that there is no better following partition plan can be generated, then the flow in Fig.2 is stopped, and the finally generated partition plan is an optimized one. In this preferred embodiment, in step 23, the partition layers are selected according to a selection order such that the selected network partitioning algorithm is balancedly applied to each of the partition layers. This way of selection can avoid the "over planning" of a certain partition layer that may limit the planning of other partition layers.

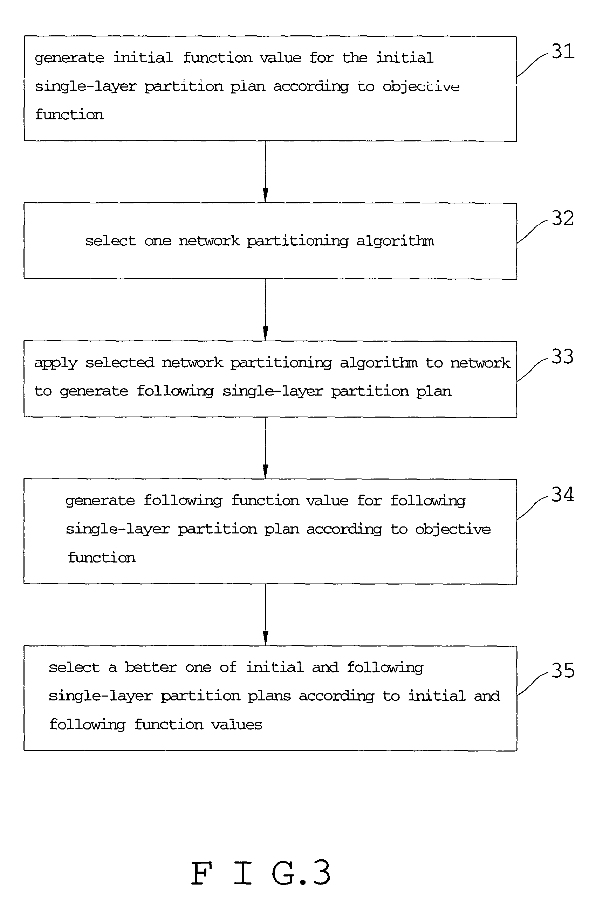

The partitioning method of the present invention can also be applied to a mobile communication network with a single-layer partitioning structure. Fig.3 is a flow chart of a preferred embodiment of the partitioning method for a mobile communication network with a single-layer partitioning structure according to the present invention. The network has an initial single-layer partition plan. As shown in Fig.3, the flow comprises steps of:

31    generating an initial function value for the initial single-layer partition plan according to an objective function;

32    selecting one of a plurality of network partitioning algorithms;

33    applying the selected network partitioning algorithm to the network to generate a following single-layer partition plan;

34    generating a following function value for the following single-layer partition plan according to the objective function; and

35    selecting a better one of the initial and following single-layer partition plans according to the initial and following function values.

The generation of the objective function and the selection of network partitioning algorithm are similar to the embodiment of Fig.2, and not described again here. Also, the following single-layer partition plan generated in step 33 should satisfy a set of partitioning constraints, which includes a subset of partition area constraints and a subset of partition layer constraints. The subsets of partition area constraints and partition layer constraints are similar to those in the embodiment of Fig.2, and not described again here.

In a varied preferred embodiment of Fig.3, steps 32 to 34 are repeated to generate a sequence of partition plans, in which a following partition plan is better than a previous one. If steps 32 to 34 are repeated such that there is no better following partition plan can be generated, then the flow in Fig.3 is stopped, and the finally generated partition plan is an optimized one.

While the present invention has been shown and described with reference to the preferred embodiments thereof and in terms of the illustrative drawings, it should not be considered as limited thereby. Various possible modifications and alterations could be conceived of by one skilled in the art to the form and the content of any particular embodiment, without departing from the scope and the spirit of the present invention.

**Claims**

1. A partitioning method for a mobile communication network comprising:

    generating an initial function value for an initial partition plan of the mobile communication network according to an objective function;
    selecting one of a plurality of network partitioning algorithms;
    performing the selected network partitioning algorithm to generate a following partition plan of the mobile communication network;
    generating a following function value for the following partition plan according to the objective function; and
    determining a better one of the initial and following partition plans according to the initial and following function values.

2. The method according to claim 1, wherein the initial and following function values correspond to a respective network load of the initial and following partition plans.

3. The method according to claim 1, wherein the selecting step, the performing step and the step for generating the following partition plan are repeated to generate a sequence of partition plans, in which a following partition plan is better than a previous one.

4. The method according to claim 1, wherein the initial and following partition plans are multi-layer, and the performing step comprises:

    selecting one of a plurality of partition layers; and
    applying the selected network partitioning algorithm to the selected partition layer to generate the following partition plan.

5. The method according to claim 4, wherein the partition layers are repeatedly selected such that the selected network partitioning algorithm is balancedly applied to each of the partition layers.

6. The method according to claim 1, wherein the objective function is generated according to a corresponding cost function for each of a plurality of network elements within the mobile communication network, wherein the corresponding cost function is for estimating a load of the network element.

7. The method according to claim 1, wherein the following partition plan satisfies a set of partitioning constraints, and the set of partitioning constraints comprises a subset of partition area constraints and a subset of partition layer constraints.

8. The method according to claim 7, wherein if the initial and following partition plans are multi-layer, the set of partitioning constraints further comprises a subset of multi-layer constraints.

9. A partitioning method for a mobile communication network with an initial partition plan, comprising:

    performing at least one of a plurality of network partitioning algorithms to generate a following partition plan of the mobile communication network;
    generating a corresponding function value for each of the initial and following partition plans according to an objective function; and
    selecting a better one of the initial and following partition plans according to the corresponding function values of the initial and following partition plans.

10. The method according to claim 9, wherein the function value represents a network load of the corresponding partition plan.

F I G.1A

F I G.1B

F I G．1C

F I G．1D

F I G. 1E

generate initial function value for initial multi-layer partition plan according to objective function    ⟋21

select one network partitioning algorithm    ⟋22

select one partition layer    ⟋23

apply selected network partitioning algorithm to selected partition layer to generate following multi-layer partition plan    ⟋24

generate following function value for following multi-layer partition plan according to objective function    ⟋25

determine a better one of initial and following multi-layer partition plans according to initial and following function values    ⟋26

F I G.2

```
┌─────────────────────────────────────────────────────┐
│ generate initial function value for the initial     │  ╱ 31
│ single-layer partition plan according to objective  │
│ function                                            │
└─────────────────────────────────────────────────────┘
                          │
                          ▼
┌─────────────────────────────────────────────────────┐
│        select one network partitioning algorithm    │  ╱ 32
└─────────────────────────────────────────────────────┘
                          │
                          ▼
┌─────────────────────────────────────────────────────┐
│ apply selected network partitioning algorithm to    │  ╱ 33
│ network to generate following single-layer          │
│ partition plan                                      │
└─────────────────────────────────────────────────────┘
                          │
                          ▼
┌─────────────────────────────────────────────────────┐
│    generate following function value for following  │  ╱ 34
│    single-layer partition plan according to         │
│    objective function                               │
└─────────────────────────────────────────────────────┘
                          │
                          ▼
┌─────────────────────────────────────────────────────┐
│   select a better one of initial and following      │  ╱ 35
│   single-layer partition plans according to         │
│   initial and following function values             │
└─────────────────────────────────────────────────────┘
```

# F I G.3